# EUROPÄISCHE PATENTSCHRIFT

(11) **EP 3 187 438 B1**
(45) Veröffentlichungstag und Bekanntmachung des Hinweises auf die Patenterteilung: **12.10.2022**
(21) Anmeldenummer: 15203142.3
(22) Anmeldetag: 30.12.2015
(51) Int. Cl.: B65G 43/08

(54) **FÖRDERANLAGE FÜR STÜCKGÜTER UND VERFAHREN ZUM BEHEBEN EINER STÖRUNG EINER FÖRDERANLAGE**
CONVEYOR SYSTEM FOR PIECE GOODS AND METHOD FOR ELIMINATING DISRUPTION IN A CONVEYOR SYSTEM
TRANSPORTEUR POUR MARCHANDISES AU DETAIL ET PROCEDE DE REPARATION D'UNE PANNE D'UN TRANSPORTEUR

(43) Veröffentlichungstag der Anmeldung: 05.07.2017
(73) Patentinhaber: Siemens Aktiengesellschaft, 80333 München (DE)
(72) Erfinder: EBIGT, Jochen, 47259 Duisburg (DE)
(74) Vertreter: Siemens Patent Attorneys

(56) Entgegenhaltungen:
- EP-A1- 2 218 659
- CN-A- 104 808 484
- DE-A1-102010 015 584
- IN-A- 4673C HE2 015

## Beschreibung

Die Erfindung bezieht sich auf eine Förderanlage für Stückgüter, insbesondere Luftfrachtcontainer und Luftfrachtpaletten, welche eine Ansteuerelektronik umfasst.

EP 1 905 705 A1 beschreibt einen Cargobereich einer Flughafenanlage. DE 10 2009 039 277 A1 betrifft ein Verfahren zum Beladen von ULD-Containern mit Fluggepäck oder ähnlichem Frachtgut, das in grösserer Menge automatisch oder manuell zu einem Stapel geschichtet in dem eine Transporteinheit bildenden ULD-Container transportierbar ist. DE 10 2008 030 546 A1 beschreibt eine Sensor-basierte Steuerung erlaubt einem autonomen Förderfahrzeug ein intelligentes Fahrverhalten, welches individuelle Eigenschaften der zu befördernden Fracht berücksichtigt. DE 102 24 312 A1 betrifft ein Verfahren zur Automatisierung des Be- und Entladens von Containerschiffen. Einem PC einer Kranautomatisierungsanlage wird ein Stauplan übermittelt. DE 10 2010 015 584 A1 beschreibt einen Matrixförderer zum Sortieren von Ladungslagen.

Ein Transport und eine Verladung von Stückgütern, insbesondere von Luftfrachtcontainern und Luftfrachtpaletten, sogenannten Unit Load Devices (ULD), sowie Ladeeinheiten, Paketen, Postsendungen und Postsendungsbehältern, mit Hilfe der Förderanlagen erfolgt, indem die Stückgüter ganz oder zumindest teilweise automatisiert mit Hilfe einer Förderanlage hin zu ihrem Bestimmungsort transportiert werden. Eine Störung im Materialfluss tritt auf, wenn ein oder mehrere Stückgüter während des Transports ineinander und/ oder an der Förderanlage selber verkanten und so gegebenenfalls hängenbleiben. Aufgrund der Störung kann das Stückgut nicht weitertransportiert werden, woraufhin die Förderanlage eine Laufzeitstörung meldet und den Transport abbricht. Eine unregelmäßige Befüllung des Stückgutes, wie sie häufig bei vom Endkunden befüllten Stückgütern wie ULDs vorkommen, begünstigt ein Verkanten, da so nicht auf alle aufliegenden Flächen des Stückgutes die gleiche Gewichtskraft wirkt. Daraus resultiert eine unregelmäßige Haftung des Stückgutes auf der Förderanlage, wodurch sie die Ausrichtung des Stückgutes während des Transports leicht ändern kann.

Die Störung kann komplett manuell von einem menschlichen Operator gelöst werden. Hierzu bewegt der Operator zumindest das die Störung auslösende Stückgut, insbesondere bewegt er das Stückgut hin und her, beispielsweise durch mechanische Tätigkeiten mit Stangen- und Hebeltechnik, bis das Stückgut wieder korrekt ausgerichtet ist. Wenn die Förderanlage ein Steuersystem umfasst, welches adaptiert ist, die Förderanlage anzusteuern, steuert der Operator zunächst ein oder mehrere Antriebe eines Antriebsmittels individuell an, um das die Störung auslösende Stückgut zunächst so zu bewegen, wobei auch hierbei insbesondere einfaches Hin- und Herbewegen des Antriebsmittels und demzufolge des darauf aufliegenden Stückgutes die Störung löst. Währenddessen beobachtet der Operator das Stückgut mit einer Kamera. Erst wenn dies nicht erfolgreich ist, oder aber wenn die Anlage kein Steuersystem umfasst, welches adaptiert ist, die Förderanlage anzusteuern, bewegt der Operator das die Störung auslösende Stückgut wie oben beschrieben komplett manuell. Dieses Vorgehen erfordert menschliche und somit kostenintensive Arbeitskraft. Wenn der Operator zunächst mit anderen Tätigkeiten ausgelastet ist oder aber wenn sich der Operator bei der komplett manuellen Lösung der Störung zunächst hin zum Ort der entstandenen Störung bewegen muss, entstehen untätige Wartezeiten, die insbesondere in der Luftfracht aufgrund wartender Flugzeuge inklusive des dazugehörigen Flugpersonals sehr kostenintensiv sind. Auch der Einsatz menschlicher Operatoren stellt einen möglichst gering zu haltenden Kostenfaktor dar. Daher ist eine Lösung erforderlich, die eine rasche, zuverlässige und kostengünstige Störungsbehebung ermöglicht.

Der vorliegenden Erfindung liegt daher die Aufgabe zugrunde, eine Störung effizient, also zeitlich rasch, zuverlässig und unter geringer Aufbietung menschlicher Arbeitskraft, zu beheben. Diese Aufgabe wird durch die in den unabhängigen Ansprüchen beschriebenen Lösungen gelöst. Vorteilhafte Ausgestaltungen der Erfindung sind in weiteren Ansprüchen angegeben.

Die erfindungsgemäße Lösung sieht eine Förderanlage für Stückgüter, insbesondere Luftfrachtcontainer und Luftfrachtpaletten, vor, wobei die Stückgüter entlang eines Transportweges mit Hilfe von mindestens einem Antriebsmittel transportierbar sind. Die Förderanlage umfasst eine Ansteuerelektronik, welche das mindestens eine Antriebsmittel ansteuert und ein mit der Ansteuerelektronik assoziiertes Logikmodul, welches adaptiert ist, eine Störung der Förderanlage automatisiert zu detektieren. Die Ansteuerelektronik ist adaptiert, ein oder mehrere einzelne Antriebe des Antriebsmittels in Antwort auf eine detektierte Störung der Förderlage so anzusteuern, dass die Störung automatisiert durch Bewegung eines oder mehrerer Stückgüter auflösbar ist.

Um die Störung automatisiert zu detektieren, umfasst die Förderanlage einen oder mehrere Detektoren, mittels welcher die Störung detektierbar ist. Detektoren detektieren die Störung augenblicklich, so dass sofort begonnen werden kann, die Störung zu beheben und nicht erst gewartet werden muss, bis ein menschlicher Operator die Störung bemerkt.

Um eine hohe Genauigkeit beim Detektieren der Störung und/ oder bei einer Ansteuerung der einen oder mehreren einzelnen Antriebe des Antriebsmittels und/ oder eine hohe Ausfallsicherheit und noch geringere Störanfälligkeit beim Detektieren zu erzielen, können die Detektoren zwei oder mehr Detektortypen umfassen, wobei der erste Detektortyp ein Abbild der Förderanlage liefert, vorzugsweise mittels einer Kamera, und der zweite Detektortyp ein Lichttaster ist. Der zweite Detektortyp ist beispielsweise ein Lichttaster. Mit Hilfe der Detektoren kann ein Erfolg der Störungsbehebung überprüft werden, wobei Kameras für ein menschliches Gehirn gut verwertbare Abbilder liefern. Bei Lichttastern ist die Ortsinformation der Störung besonders leicht extrahierbar, insbesondere wenn die Lichttaster in die Förderstrecke integriert sind.

Die Förderlage ist so ausgestaltet, dass die Störung eine Blockierung und/ oder Verkeilung von mindestens einem Stückgut und/ oder eine Abweichung von mindestens einem Stückgut von seinem vorhergesehenen Transportweg sein kann. Der vorhergesehene Transportweg eines Stückguts umfasst auch dessen Ausrichtung entlang des Transportweges, so dass ein Verziehen und/ oder ein Verdrehen des Stückgutes ebenfalls eine Störung sein kann. Um die Förderanlage auf vielfältige Weise ansteuern und überwachen zu können, umfasst die Förderanlage ein Steuersystem. Die Ansteuerelektronik kann in das Steuersystem integriert werden, wodurch auch eine Einsparung von Komponenten, beispielsweise des Logikmoduls, erzielt werden kann und bereits bestehende Verbindungen zwischen den Komponenten, innerhalb des Steuersystems und zwischen Steuersystem und restlicher Förderanlage, genutzt werden können, insbesondere für die Ansteuerelektronik. Mit Hilfe des Steuersystems werden die Antriebsmittel auch manuell von einem Operator angesteuert, so dass auch wenn die automatisierte Störungsbehebung nicht erfolgreich ist, nicht als erstes der komplett manuelle Ansatz der Störungsbehebung, insbesondere Hebel- und Stangentechnik, durchgeführt werden muss.

Um die Störung ohne Einsatz menschlicher Arbeitskraft dort zu beheben, wo sie verursacht wird, kann die Störung der Förderlage automatisiert durch Bewegung des die Störung auslösenden Stückgutes auflösbar sein.

Damit die Antriebe auch manuell ansteuerbar sind, was beispielsweise dann vorteilhaft ist, wenn die automatisierte Behebung der Störung nicht erfolgreich ist, ist die Ansteuerelektronik zudem adaptiert, mittels eines Betätigungselementes den einen oder die mehreren Antriebe manuell anzusteuern. Die Betätigungselemente können, müssen aber nicht, Teil des Steuersystems sein.

Um automatisiert eine besonders einfache und somit vorteilhafte Ansteuerung der Antriebe zu erzielen, ist eine Ansteuerung des einen oder der mehreren Antriebe von einem Algorithmus automatisiert bestimmbar, wobei der Algorithmus lernfähig, vorzugsweise iterativ lernfähig, sein kann. Eine Lernfähigkeit des Algorithmus kann umfassen, dass dieser mittels Standard-Störungssituationen bestimmt und/ oder verbessert wird. Eine iterative Lernfähigkeit beschreibt insbesondere, dass Auswirkungen jeder erfolgten Ansteuerung hinsichtlich ihres Erfolges bei der Störungsbehebung bewertet werden, wobei erfolgreiche Strategien dann zukünftig bevorzugt angewendet werden.

Damit der Algorithmus und somit die automatisierte Behebung der Störung stets noch weiter verbessert wird, so dass der Algorithmus die Störung genauso erfolgreich oder erfolgreicher wie ein menschlicher, die Antriebe ansteuernder Operator lösen kann, ist die Ansteuerelektronik adaptiert, den

Algorithmus anhand einer manuellen Betätigung der Betätigungselemente zu erlernen. Auf diese Weise lernt der Algorithmus auch neue, zunächst nicht implementierte Lösungsstrategien zu verwenden. Dies ist insbesondere dann ein Vorteil, wenn die bis dahin verwendeten Lösungsstrategien nicht erfolgreich und/ oder nicht effizient genug, vor allem bezüglich ihrer Durchführungszeit, waren.

Hinsichtlich eines Verfahrens wird die vorstehend genannte Aufgabe gelöst durch ein Verfahren zum Beheben einer Störung einer Förderanlage für Stückgüter, insbesondere Luftfrachtcontainer und Luftfrachtpaletten, wobei die Stückgüter entlang eines Transportweges mit Hilfe von mindestens einem Antriebsmittel transportierbar sind. Das Verfahren umfasst die Verfahrensschritte:
a) Detektieren der Störung;
b) Auflösen der Störung durch Bewegen eines oder mehrerer Stückgüter in Antwort auf das Detektieren der Störung, wobei das Bewegen durch ein Ansteuern eines oder mehrerer einzelner Antriebe des mindestens einen Antriebsmittels automatisiert und/ oder manuell ausgelöst wird.

Um die Störung automatisiert zu detektieren, ohne dass eine Reaktion eines menschlichen Operators abgewartet werden muss, wird die Störung mittels mindestens eines ersten und eines zweiten Detektortyps detektiert, wobei der erste Detektortyp ein Abbild der Förderanlage liefern kann, vorzugsweise mittels einer Kamera, und der zweite Detektortyp ein Lichttaster sein kann. Ein Einsatz zweier unterschiedlicher Detektortypen ermöglicht eine noch höhere Genauigkeit beim Detektieren, wodurch das Verfahren noch effizienter wird, und geht darüber hinaus mit einer höheren Ausfall- und/ oder Fehlersicherheit einher.

Um die Störung auf besonders einfache Art zu beheben, können in Antwort auf die detektierte Störung das eine oder die mehreren Stückgüter, welche die Störung auslösen, bewegt werden. So wird die Störung direkt an ihrer Wurzel behoben.

Um eine Laufzeitstörung zu verhindern, kann das Ansteuern des einen oder der mehreren einzelnen Antriebe des Antriebsmittels nur während einer vorgegebenen Zeitspanne durchgeführt werden. Im Anschluss kann ein menschlicher Operator das Verfahren durchführen und/ oder die Störung komplett manuell behoben werden. Laufzeitstörungen treten auf, wenn das Verfahren durchgeführt wird, die Störung aber nicht durch das automatisierte Ansteuern eines oder mehrerer einzelner Antriebe auflösbar ist. Ohne einen Abbruch nach der vorgegebenen Zeitspanne kann das automatisiert durchgeführte Verfahren sonst in einer unendlichen, gar nicht oder zumindest nicht effizient genug die Störung behebenden Schlaufe durchgeführt werden.

Um das Verfahren zeitlich rasch, effizient und mit wenig Arbeitsaufwand durchzuführen, wird das Ansteuern der einen oder der mehreren Antriebe von einem Algorithmus automatisiert mit einer Ansteuerelektronik durchgeführt, wobei vorzugsweise der Algorithmus automatisiert und/ oder iterativ lernen kann, wie die Störung aufgelöst wird. Dadurch wird der Algorithmus stets verbessert und verfeinert. Automatisiertes Lernen umfasst insbesondere, dass in den Algorithmus implementiert wird, welches Ansteuern bei einer Störung mit ähnlicher Anordnung der Stückgüter in der Vergangenheit zu einer besonders raschen Auflösung der Störung geführt hat. Iteratives Lernen umfasst, dass der Algorithmus fortlaufend stets noch mehr verbessert wird.

Um auch neue, dem Algorithmus bis dahin unbekannte Lösungsstrategien in die automatisierte Durchführung des Verfahrens einfließen zu lassen, insbesondere von einem menschlichen Operator durchgeführte Lösungsstrategien, kann die Ansteuerelektronik adaptiert sein, eine manuelle Betätigung der Betätigungselemente zur Störungsbehebung in den Algorithmus einfließen zu lassen.

Bevorzugte Ausführungsformen der Erfindung werden nachfolgend anhand der Figuren beispielsweise näher erläutert. Dabei zeigen:
- Figur 1: eine schematische Darstellung einer Förderanlage für Stückgüter;
- Figur 2: die Förderanlage von Figur 1 mit möglicherweise auftretenden Störungen unterschiedlicher Stückgüter; und
- Figur 3: eine Förderanlage für Stückgüter wie Luftfrachtcontainer und Luftfrachtpaletten.

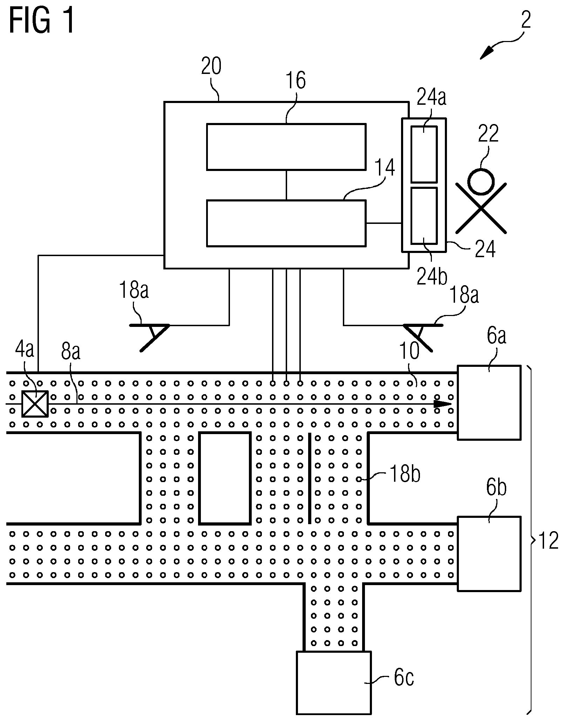

Figur 1 zeigt eine schematische Darstellung einer Förderanlage 2 für Stückgüter 4 gemäß einer bevorzugten Ausführungsform der Erfindung. Als Stückgut 4 gilt hierbei jedes einzeln am Stück transportierbare Gut, beispielsweise Container, insbesondere Luftfrachtcontainer und Luftfrachtpaletten wie Unit Load Devices (ULDs), Gebinde, Ladeeinheiten, Pakete, Postsendungen und Postsendungsbehälter, aber auch Kabel-, Papier- und Blechrollen, Fässer und Säcke. Ein Stückgut 4 selber kann wiederum mit kleinerem Stückgut 4 befüllt werden; sowohl ein Container, als auch ein kleines Paket sind Stückgüter 4. Die Größe von Stückgütern 4 variiert demzufolge stark, so dass die Dimension der Förderanlage 2 dem jeweiligen Stückguttyp angepasst sein muss.

Ein Stückgut 4a soll hin zu einer Endstelle 6a der Förderanlage 2 entlang einer Förderstrecke 12 transportiert werden. Hierzu wird das Stückgut 4a entlang seines direkten Transportweges 8a auf einem Antriebsmittel 10 aufliegend bewegt. Damit das Antriebsmittel 10, mittels welchem das Stückgut 4a transportierbar ist, je nach Einsatzgebiet unterschiedlich ausgestaltet werden kann, umfasst das Antriebsmittel 10 eine Rollenbahn und/ oder einen Kugelrollentisch und/ oder ein Förderband. Das Antriebsmittel 10 wird von einem oder mehreren Antrieben angetrieben und ist ausgestaltet, die Stückgüter 4 gerichtet zu transportieren und so ihre Transportrichtungen zu beeinflussen. Dies kann beispielsweise mit einem Eckumsetzer und/ oder mit einem schwenkbaren Antriebsmittel 10 erreicht werden. Das Antriebsmittel 10 wird von einen oder mehreren einzelnen Antrieben angetrieben, so dass einzelne Bereiche des Antriebsmittels 10 die Stückgüter 4 in unterschiedliche Richtungen transportieren können. So kann bei einer Rollenbahn jeweils eine oder mehrere Rollen und bei einem Kugelrollentisch ein oder mehrere Transportkugeln von einem separaten Antrieb angetrieben werden. Dies ermöglicht eine große Vielfalt zum Bewegen der auf dem Antriebsmittel 10 aufliegenden Stückgüter 4. Durch eine Umkehr der Transportrichtung der Antriebe des Antriebsmittels 10, die beispielsweise kleine Motoren sein können, können die Stückgüter 4 hin- und herbewegt werden.

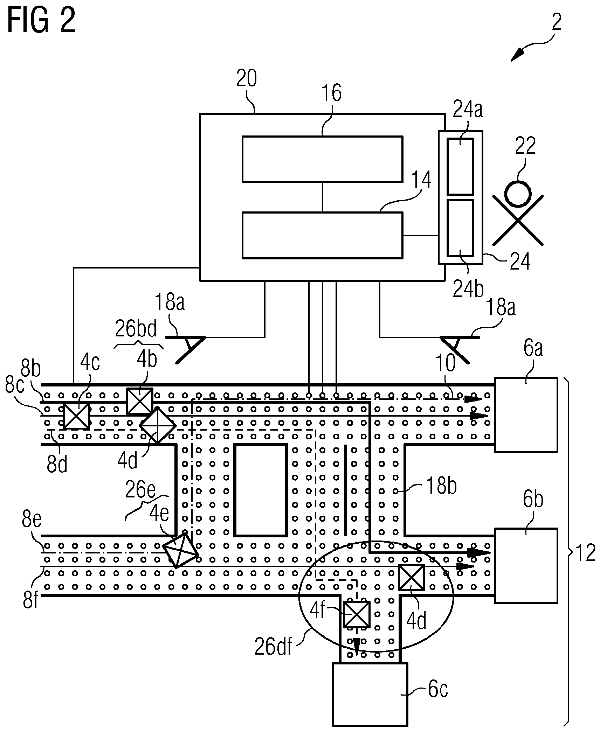

Der Transportweg 8a des Stückguts 4a ist automatisiert bestimmbar. Bei mehreren Stückgütern müssen hierbei auch Transportwege 8 weiterer zugleich auf der Förderanlage 2 beförderter Stückgüter 4 berücksichtigt werden. Die Förderanlage 2 umfasst eine Ansteuerelektronik 14, welche das Antriebsmittel 10 ansteuert, sowie ein mit der Ansteuerelektronik 14 assoziiertes Logikmodul 16. Das Logikmodul 16 ist adaptiert, eine Störung 26 der Förderanlage 2 automatisiert zu detektieren. Die Ansteuerelektronik 14 ist adaptiert, ein oder mehrere einzelne, in Figur 1 nicht dargestellte Antriebe des Antriebsmittels 10 in Antwort auf eine detektierte Störung 26 der Förderanlage 2 so anzusteuern, dass die Störung 26 automatisiert durch Bewegung eines oder mehrerer Stückgüter 4 auflösbar ist. Beispiele von in der Förderanlage 2 auftretenden Störungen 26 werden in Figur 2 dargestellt. Die Förderanlage 2 umfasst ein Steuersystem 20, welches wiederum das Logikmodul 16 und die Ansteuerelektronik 14 umfasst.

Die Förderanlage 2 umfasst Detektoren 18, mittels welcher die Störungen 26 detektierbar sind. Zwei Kameras 18a als ein erster verwendeter Detektortyp liefern ein Abbild der Förderanlage 2, wobei das Abbild umso genauer ist, je mehr Kameras 18a verwendet werden. Die Kameras 18a sind oberhalb oder neben der Förderstrecke 12 angeordnet. In die Förderstrecke 12 in einer gleichmäßigen Anordnung integriert sind Lichttaster 18b als ein zweiter Detektortyp. Wenn das Stückgut 4a entlang seines Transportweges 8a transportiert wird, überfährt es und belegt so mindestens je vier Lichttaster 18b (bei den in Figur 1 dargestellten Abmessungen). Die Lichttaster sind in der Förderstrecke 12 verbaut und schauen nach oben. Wenn das Stückgut 4a über einen Lichttaster 18b fährt, werden sie abgedunkelt und als Status belegt an die Ansteuerelektronik 14 gemeldet. Die Ortsinformation jedes Lichttasters 18b ist somit bekannt, so dass auch die momentane Ortsinformation des Stückgutes 4a besonders einfach und wenig störanfällig extrahiert werden kann.

Mit dem Steuersystem 20 kann ein menschlicher Operator 22 über eine Mensch-Maschine-Schnittstelle 24 die Förderanlage 2 überwachen und steuern. Die Mensch-Maschine-Schnittstelle 24 bildet die von den Detektoren 18 ermittelten Informationen in einer Benutzeroberfläche 24a dar und der Operator 22 kann mittels Betätigungselementen 24b die Förderanlage 2, insbesondere die Antriebe des Antriebsmittels 10 ansteuern. Die Ansteuerelektronik 14 dient somit als Schnittstelle zwischen Detektoren 18, Logikmodul 16 und Mensch-Maschine-Schnittstelle 24. Wenn das Stückgut 4a aufgrund einer Störung 26 nicht weitertransportiert werden kann, bleiben die Lichttaster 18b kontinuierlich belegt. Dies wird automatisiert vom Logikmodul 16 als Störung 26 erkannt und an die Ansteuerelektronik 14 und gleichzeitig an die Benutzeroberfläche 24a gemeldet.

Die detektierte Störung 26 kann komplett manuell von einem Operator 22 mittels Stangen- und Hebeltechnik, durch eine manuelle Betätigung der Betätigungselemente 24b und gleichzeitiger Beobachtung durch einen Operator 22 oder automatisiert von der Ansteuerelektronik 14 behoben werden.

Das automatisierte Ansteuern zum Beheben einer Störung 26 durch die Ansteuerelektronik 14 wird von einem Algorithmus durchgeführt, der bestimmt, welche Antriebe des Antriebsmittels 10 mit welcher Geschwindigkeit, Transportrichtung und wie lange angesteuert werden. Hierbei lernt der Algorithmus automatisiert durch Auswerten der vergangenen manuellen Versuche zur Störungsauflösung eines menschlichen Operators 22, welches Vorgehen die Störung 26 erfolgreich aufgelöst hat. Hierzu ist die Ansteuerelektronik 14 adaptiert, die manuelle Betätigung der Betätigungselemente 24b zur Störungsbehebung in den Algorithmus als Input einfließen zu lassen. Auch das vom Algorithmus bestimmte Ansteuern und die dadurch auf die die Störung 26 auslösenden Stückgüter 4 wird kontinuierlich ausgewertet, so dass der Algorithmus iterativ lernt und stets verfeinert und verbessert wird. Bei einer ähnlichen Störung werden in der Zukunft die in der Vergangenheit besonders erfolgreichen Ansteuerungsmuster bevorzugt durchgeführt. Störung werden anhand ihrer Positionierung auf der Förderstrecke 12, die mit Hilfe der Detektoren 18 bestimmt wird, des Stückguttyps und einer Anordnung des die Störung auslösenden Stückgutes 4 und weiterer Stückgüter 4 auf der Förderstrecke 12 klassifiziert.

Figur 2 zeigt die Förderanlage 2 von Figur 1 mit den automatisiert bestimmten Transportwegen 8b - 8f unterschiedlicher Stückgüter 4b - 4f und illustriert beispielhaft möglicherweise auftretende Störungen 26bd, 26e, 26df gemäß einer bevorzugten Ausführungsform der Erfindung. Allerdings ist ein gleichzeitiges Auftreten aller nachfolgend dargestellten Störungen 26bd, 26e, 26df unwahrscheinlich. Die Stückgüter 4c und 4e sollen zur Endstelle 6a, die Stückgüter 4b und 4f zur Endstelle 6b und das Stückgut 4d zur Endstelle 6c transportiert werden.

Im oberen Bereich der Förderstrecke 12 kreuzen sich die Transportwege 8b, 8c, 8d, 8f, was eine besondere Störanfälligkeit darstellt, da bereits eine kleine Veränderung der Ausrichtung eines Stückgutes 4, insbesondere ein leichtes Verziehen, eine Blockierung durch Verkanten mit Kanten und Rändern der Förderstrecke 12 und als weitere Folge mit nachfolgendem Stückgut 4 bewirkt. Das Verziehen tritt besonders häufig auf bei ungleichmäßiger Haftung des Stückgutes 4 auf dem Antriebsmittel 10, was insbesondere bei ungleichmäßig befüllten Stückgütern 4 wie den vom Endkunden befüllten ULDs vorkommt.

Die Störung 26bd betrifft die Stückgüter 4b und 4d, die sich gegenseitig blockieren. Das Stückgut 4d hat sich zunächst leicht verzogen und dadurch am Rande der Förderstrecke 12 verfangen. Das direkt nachfolgende Stückgut 4b kann daher genauso wie das zunächst die Störung 26bd auslösende Stückgut 4d nicht weiter transportiert werden, so dass die gesamte Förderstrecke 12 im Bereich der Störung 26bd blockiert ist. Die Detektoren 18 überwachen die Förderanlage kontinuierlich, so dass die Störung 26bd zunächst mittels zweier Detektortypen, den Lichttastern 18b und den Kameras 18a detektiert wird.

Um die Störung 26bd in Antwort auf das Detektieren der Störung 26bd zu lösen, müssen die Stückgüter 4b, 4d einzeln bewegt werden, da sonst das Verziehen des Stückguts 4d nicht durch einfaches Rotieren rückgängig gemacht werden kann. Ziel ist es, die Stückgüter 4b, 4d wieder korrekt auf ihren Transportwegen 8b, 8c auszurichten. Dies kann erreicht werden, indem zunächst das Stückgut 4b, oder aber beide Stückgüter 4b, 4d gleichzeitig, in der zeichnerischen Darstellung nach links und im Anschluss wieder nach rechts bewegt werden. Die Bewegung der Stückgüter 4b, 4d wird ausgelöst durch ein Ansteuern eines oder mehrerer einzelner Antriebe des Antriebsmittels 10. Die Antriebe werden mit der Ansteuerelektronik 14 angesteuert, wobei zunächst ein automatisiertes Ansteuern erfolgt. Damit die Störung 26bd möglichst rasch behoben wird, wird das Ansteuern nur während einer vorgegebenen Zeitspanne durchgeführt. So wird verhindert, dass das automatisierte Ansteuern unnötig lange durchgeführt wird, wenn es die Störung 26bd nicht oder zumindest nicht effizient auflösen kann. Es ist beispielsweise möglich, dass die Stückgüter 4b, 4d so sehr blockiert sind, dass das Antriebsmittel 10 sie nicht mehr bewegen kann. Oder aber die Stückgüter 4b, 4d werden zwar bewegt, allerdings dennoch nicht so, dass die Störung 26bd erfolgreich aufgelöst wird. Um eine Massenkarambolage mit dem nächsten nachfolgenden Stückgut 4c und um untätige Wartezeiten zu verhindern, ist ein schnelles Auflösen der Störung 26bd erforderlich. Ein temporäres Anhalten des Transportes des nachfolgenden Stückgutes 4c, zumindest so lange bis die Störung 26bd behoben ist, würde die Massenkarambolage sicher verhindern.

Wenn das automatisierte Ansteuern nicht erfolgreich ist, bedient ein menschlicher Operator 22 an der Mensch-Maschine-Schnittstelle 24 die Betätigungselemente 24b und überwacht gleichzeitig an der Benutzeroberfläche 24a die Förderanlage 2. Zur Überwachung dienen insbesondere die von den Detektoren 18 gelieferten Informationen, allen voran die von den Kameras 18a gelieferten Abbilder. Hierzu ist die Ansteuerelektronik adaptiert, mittels des Betätigungselementes 24b die Antriebe manuell anzusteuern.

Welches Vorgehen zur Störungsbehebung genau Erfolg versprechend ist und wie genau die Antriebe des Antriebsmittels 10 angesteuert werden sollen, hängt stark von sowohl der Ausgestaltung des Antriebsmittels 10, als auch der Stückgüter 4 ab. Beispielsweise kann eine Rollenbahn mit einzelnen Antrieben in jeder Transprotrolle sehr viel feinmaschiger angesteuert werden als ein wenig segmentiertes Förderband. Daher muss jedes Verfahren zum Beheben einer Störung 26 und demzufolge auch die Ansteuerelektronik 14 und der Algorithmus an die jeweilige Situation anpassbar sein.

Bei der Störung 26e hat sich das Stückgut 4e an einer Ecke der Förderstrecke 12 verkeilt. Ein einfaches Bewegen nach links sollte somit die Störung 26e lösen können - vorausgesetzt das Stückgut 4e hat sich nicht zu sehr verkeilt und so festgesetzt.

Bei der Störung 26df haben sich die Wege der Stückgüter 4d, 4f gekreuzt, was zu einem fehlerhaften Vertauschen ihrer Transportwege 8d, 8f geführt hat. Um diese Störung zu lösen, müssen die Stückgüter 4d, 4f einfach wieder zurück an die Stelle des Vertauschens, oder aber auf direktem Wege hin zu ihren jeweiligen Endstellen 6b, 6c transportiert werden.

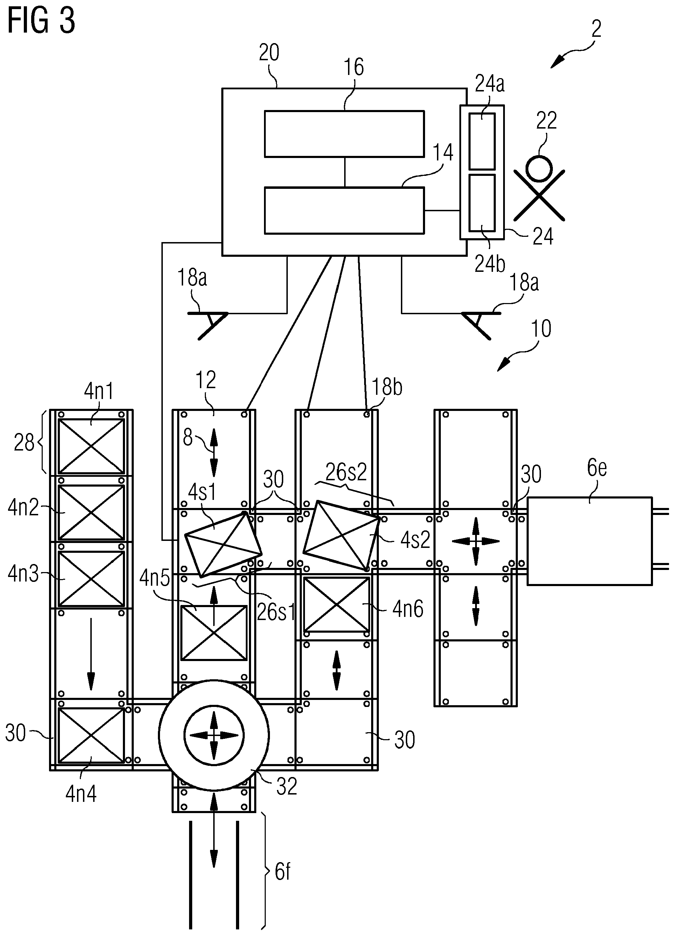

Figur 3 zeigt eine schematische Darstellung einer Förderanlage 2 welche insbesondere optimiert ist für einen Transport und eine Verladung von Stückgütern 4 wie Luftfrachtcontainern und Luftfrachtpaletten. Die Größenverhältnisse von Förderstrecke und Stückgütern 4 entsprechen in etwa denjenigen einer typischen Luftfrachtförderanlage. Die Förderanlage 2 umfasst wie die in den Figuren 1 und 2 dargestellten Förderanlagen 2 ein Steuersystem 20, eine Ansteuerelektronik 14 und ein mit der Ansteuerelektronik assoziiertes Logikmodul 16. Die Stückgüter 4 können entlang der mit Pfeilen angedeuteten Transportwege 8 auf der Förderstrecke 12 transportiert werden. Um ein Abbiegen zu ermöglichen, umfasst die Förderanlage 2 mehrere Eckumsetzer 30 sowie einen Drehteller 32. Die Stückgüter werden hin zu den Endstellen 6e, 6f transportiert, wobei die Endstelle 6e ein Aufzug ist, der adaptiert ist, die Stückgüter 4 auf eine andere Ebene der Förderanlage 2 zu befördern. An der Endstelle 6f befinden sich Schienen, auf denen ein Transportfahrzeug geführt werden kann, welches adaptiert ist, die Stückgüter 4 aus der Förderstrecke 12 zu entnehmen und in die Förderstrecke 12 einzubringen.

Die Förderstrecke 12 ist in einzeln ansteuerbare Förderstreckensegmente 28 unterteilt, an deren Anfang und Ende jeweils zwei Lichttaster 18b in die Förderstrecke 12 verbaut sind. Die Lichttaster 18 melden an die Ansteuerelektronik 14, wenn ein Stückgut 4 das Förderstreckensegment 28 erreicht und wieder verlässt. Wenn die Lichttaster 18b melden, dass trotz Ansteuerung des Antriebsmittels des betreffenden Förderstreckensegmentes 28 ein Stückgut 4 die Lichttaster 18b eines Förderstreckensegmentes 28 zwar erreicht, aber anschließend nicht wieder verlässt, bzw. der nachfolgende Lichttaster 18b nicht in der vorgegebenen Zeit erreicht wird, oder eine ähnliche nicht erwartete Meldung der Lichttaster 18b, liegt eine Störung 26 vor. Aufgrund der Abmessungen von Stückgut 4 und Förderstrecke liegt eine Störung 26 vor, wenn nicht mindestens zwei gegenüberliegende Lichttaster 18b gleichzeitig belegt sind.

Insbesondere ein Transport über die Eckumsetzer 30 ist störanfällig. Die Stückgüter 4s1 und 4s2 haben sich an Ecken der Förderstrecke 12 verkeilt. Die Kameras 18a und die Lichttaster 18b detektieren die Störungen 26s1, 26s2. Zunächst wird versucht, die Störungen 26s1, 26s2 werden automatisiert aufzulösen, indem die Antriebe der Antriebsmittel 10 angesteuert werden. Die Segmentierung der Förderstrecke 12 erleichtert eine Klassifizierung der bevorzugt vom Algorithmus verwendeten Lösungsstrategien.

### Bezugszeichenliste

- 2: Förderanlage;
- 4: Stückgut; Das Bezugszeichen 4 steht hierbei auch generisch für eines oder mehrere der Stückgüter 4a, 4b, 4c, 4d, 4e, 4f, 4n1, 4n2, 4n3, 4n4, 4n5, 4n6, 4s1, 4s2, ... ;
- 6: Endstelle; Das Bezugszeichen 6 steht hierbei auch generisch für eine oder mehrere der Endstellen 6a, 6b, 6c, 6d, 6e, 6f, ... ;
- 8: Transportweg; Das Bezugszeichen 8 steht hierbei auch generisch für einen oder mehrere der Transportwege 8a, 8b, 8c, 8d, 8e, 8f, ... ;
- 10: Antriebsmittel;
- 12: Förderstrecke;
- 14: Ansteuerelektronik;
- 16: Logikmodul;
- 18: Detektor; Das Bezugszeichen 18 steht auch generisch für die Bezugszeichen 18a, 18b;
- 18a: Kamera;
- 18b: Lichttaster;
- 20: Steuersystem;
- 22: Operator;
- 24: Mensch-Maschine-Schnittstelle;
- 24a: Benutzeroberfläche;
- 24b: Betätigungselemente;
- 26: Störung; Das Bezugszeichen 26 steht hierbei auch generisch für eine oder mehrere der Störungen 26e, 26df, 26bd, 26s1, 26s2, ... ;
- 28: Förderstreckensegment;
- 30: Eckumsetzer;
- 32: Drehteller;

## Patentansprüche

1. Förderanlage (2) für Stückgüter (4), insbesondere Luftfrachtcontainer und Luftfrachtpaletten, wobei die Stückgüter (4) entlang eines Transportweges (8) mit Hilfe von mindestens einem Antriebsmittel (10), welches einen oder mehrere einzelne Antriebe umfasst, transportierbar sind, umfassend:
a) eine Ansteuerelektronik (14), welche das mindestens eine Antriebsmittel (10) ansteuert;
b) ein mit der Ansteuerelektronik (14) assoziiertes Logikmodul (16), welches adaptiert ist, eine Störung (26) der Förderanlage (2) automatisiert zu detektieren, wobei die Störung (26) eine Blockierung und/ oder Verkeilung von mindestens einem Stückgut (4) ist;
c) einen oder mehrere Detektoren (18), mittels welcher die Störung (26) detektierbar ist;
wobei
d) die Ansteuerelektronik (14) adaptiert ist, den einen oder die mehreren einzelnen Antriebe des Antriebsmittels (10) in Antwort auf eine detektierte Störung (26) der Förderlage so anzusteuern, dass die Störung (26) automatisiert durch gezielte Ansteuerung eines oder mehrerer der einzelnen Antriebe und somit Bewegung eines oder mehrerer Stückgüter (4) auflösbar ist;
e) die Ansteuerelektronik (14) zudem adaptiert ist, mittels eines Betätigungselementes (24b) den einen oder die mehreren Antriebe manuell anzusteuern;
f) eine Ansteuerung des einen oder der mehreren Antriebe von einem Algorithmus automatisiert bestimmbar ist, wobei der Algorithmus lernfähig, vorzugsweise iterativ lernfähig, ist;
g) die Ansteuerelektronik (14) adaptiert ist, den Algorithmus anhand einer manuellen Betätigung der Betätigungselemente (24b) zu erlernen.

2. Förderanlage (2) nach Anspruch 1, **dadurch gekennzeichnet, dass**
die Detektoren (18) zwei oder mehr Detektortypen umfassen, wobei der erste Detektortyp ein Abbild der Förderanlage (2) liefert, vorzugsweise mittels einer Kamera (18a), und der zweite Detektortyp ein Lichttaster (18b) ist.

3. Förderanlage (2) nach einem der Ansprüche 1 bis 2, **dadurch gekennzeichnet, dass** die Störung
eine Abweichung von mindestens einem Stückgut (4) von seinem vorhergesehenen Transportweg (8) ist.

4. Förderanlage (2) nach einem der Ansprüche 1 bis 3, **dadurch gekennzeichnet, dass**
die Förderanlage (2) ein Steuersystem (20) umfasst.

5. Förderanlage (2) nach einem der Ansprüche 1 bis 4, **dadurch gekennzeichnet, dass**
die Störung (26) der Förderlage automatisiert durch Bewegung des die Störung (26) auslösenden Stückgutes (4) auflösbar ist.

6. Verfahren zum Beheben einer Störung (26) einer Förderanlage (2) für Stückgüter (4), insbesondere Luftfrachtcontainer und Luftfrachtpaletten, wobei die Stückgüter (4) entlang eines Transportweges (8) mit Hilfe von mindestens einem Antriebsmittel (10) transportierbar sind, umfassend die Verfahrensschritte:
a) Detektieren der Störung (26);
b) Auflösen der Störung (26) durch Bewegen eines oder mehrerer Stückgüter (4) in Antwort auf das Detektieren der Störung (26), wobei das Bewegen durch ein Ansteuern eines oder mehrerer einzelner Antriebe des mindestens einen Antriebsmittels (10) automatisiert und/ oder manuell ausgelöst wird, wobei
- die Störung (26), welche eine Blockierung und/ oder Verkeilung von mindestens einem Stückgut (4) ist, mittels mindestens eines ersten und eines zweiten Detektortyps detektiert wird, wobei der erste Detektortyp ein Abbild der Förderanlage (2) liefert, vorzugsweise mittels einer Kamera (18a), und der zweite Detektortyp ein Lichttaster (18b) ist und
in Antwort auf die detektierte Störung (26) das eine oder die mehreren Stückgüter (4), welche die Störung (26) auslösen, bewegt werden;
- das Ansteuern des einen oder der mehreren Antriebe mittels eines Betätigungselementes (24b) manuell oder von einem Algorithmus automatisiert mit einer Ansteuerelektronik (14) durchgeführt wird, wobei vorzugsweise der Algorithmus automatisiert und/ oder iterativ lernt, wie die Störung (26) aufgelöst wird; und
- die Ansteuerelektronik (14) adaptiert ist, eine manuelle Betätigung der Betätigungselemente (24b) zur Störungsbehebung in den Algorithmus einfließen zu lassen.

7. Verfahren nach Anspruch 6, **dadurch gekennzeichnet, dass** das Ansteuern des einen oder der mehreren einzelnen Antriebe des Antriebsmittels (10) nur während einer vorgegebenen Zeitspanne durchgeführt wird.

## Claims

1. Conveyor system (2) for piece goods (4), in particular air freight containers and air freight pallets, wherein the piece goods (4) can be transported along a transport path (8) with the aid of at least one drive means (10), which comprises one or more individual drives, comprising:
a) an activation electronics unit (14), which activates the at least one drive means (10);
b) a logic module (16) associated with the activation electronics unit (14), which is adapted to detect a disturbance (26) in the conveyor system (2) in an automated manner, wherein the disturbance (26) is a blocking and/or wedging of at least one piece goods item (4);
c) one or more detectors (18), by means of which the disturbance (26) can be detected;
wherein
d) the activation electronics unit (14) is adapted to activate the one or more individual drives of the drive means (10) in response to a detected disturbance (26) in the conveyor system, in such a manner that the disturbance (26) can be resolved in an automated manner by targeted activation of one or more of the individual drives and thus moving one or more piece goods (4);
e) the activation electronics unit (14) is also adapted to activate the one or more drives manually by means of an actuation element (24b);
f) it is possible for activation of the one or more drives to be determined in an automated manner by an algorithm, wherein the algorithm is adaptive, preferably iteratively adaptive;
g) the activation electronics unit (14) is adapted to learn the algorithm from manual actuation of the actuation elements (24b) .

2. Conveyor system (2) according to claim 1, **characterised in that**
the detectors (18) comprise two or more detector types, the first detector type supplying an image of the conveyor system (2), preferably by means of a camera (18a), and the second detector type being a light sensor (18b).

3. Conveyor system (2) according to one of claims 1 to 2, **characterised in that**
the disturbance is a deviation of at least one piece goods item (4) from its intended transport path (8).

4. Conveyor system (2) according to one of claims 1 to 3, **characterised in that**
the conveyor system (2) comprises a control system (20).

5. Conveyor system (2) according to one of claims 1 to 4, **characterised in that**
the disturbance (26) in the conveyor system can be resolved in an automated manner by moving the piece goods (4) causing the disturbance (26).

6. Method for eliminating a disturbance (26) in a conveyor system (2) for piece goods (4), in particular air freight containers and air freight pallets, wherein the piece goods (4) can be transported along a transport path (8) with the aid of at least one drive means (10), comprising the method steps:
a) detecting the disturbance (26);
b) resolving the disturbance (26) by moving one or more piece goods (4) in response to the detection of the disturbance (26), wherein the moving is triggered in an automated and/or manual manner by activating one or more individual drives of the at least one drive means (10), wherein
- the disturbance (26), which is a blocking and/or wedging of at least one piece goods item (4), is detected by means of at least one first and a second detector type, wherein the first detector type supplies an image of the conveyor system (2), preferably by means of a camera (18a), and the second detector type is a light sensor (18b) and
the one or more piece goods (4) causing the disturbance (26) is/are moved in response to the detected disturbance (26);
- the activation of the one or more drives by means of an actuation element (24b) is implemented manually or in an automated manner by an algorithm using an activation electronics unit (14), wherein the algorithm preferably learns in an automated and/or iterative manner how the disturbance (26) is resolved; and
- the activation electronics unit (14) is adapted to include manual actuation of the actuation elements (24b) for disturbance elimination in the algorithm.

7. Method according to claim 6, **characterised in that** the activation of the one or more individual drives of the drive means (10) is only implemented during a predefined time interval.

## Revendications

1. Convoyeur (2) de marchandises (4), en particulier de conteneurs de fret aérien et de palettes de fret aérien, les marchandises (4) étant transportables le long d'un chemin de transport (8) à l'aide d'au moins un dispositif d'entraînement (10) qui comprend un ou plusieurs entraînements respectifs, comprenant :
a) un système électronique de commande (14) qui commande l'au moins un dispositif d'entraînement (10) ;
b) un module logique (16) associé au système électronique de commande (14) qui est adapté pour détecter de façon automatisée une perturbation (26) du convoyeur (2), la perturbation (26) étant un blocage et/ou un coinçage d'au moins une marchandise (4) ;
c) un ou plusieurs détecteurs, au moyen desquels la perturbation (26) est détectable ;
dans lequel
d) le système électronique de commande (14) est adapté pour commander ledit ou lesdits entraînements respectifs du dispositif d'entraînement (10) en réponse à la détection d'une perturbation (26) du convoyeur, de sorte que la perturbation (26) puisse être déclenchée automatiquement par commande ciblée d'un ou plusieurs des entraînements respectifs et donc par mouvement d'une ou plusieurs marchandises (4) ;
e) le système électronique de commande (14) est en outre adapté pour commander manuellement l'un ou plusieurs entraînements respectifs au moyen d'un actionneur (24b) ;
f) une commande d'un ou plusieurs entraînements respectifs est automatisable de façon déterminable par un algorithme, l'algorithme étant capable d'apprendre, de préférence capable d'apprendre par itérations ;
g) le système électronique de commande (14) est adapté pour apprendre l'algorithme au moyen d'un actionnement manuel des actionneurs (24b).

2. Convoyeur (2) selon la revendication 1, **caractérisé en ce que** les détecteurs (18) comprennent au moins deux types de détecteur, le premier type de détecteur fournissant une image du convoyeur (2), de préférence au moyen d'une caméra (18a), et le second type de détecteur étant un capteur optique (18b).

3. Convoyeur (2) selon l'une des revendications 1 à 2, **caractérisé en ce que** la perturbation est un écart d'au moins une marchandise (4) de son chemin de transport (8) prévu.

4. Convoyeur (2) selon l'une des revendications 1 à 3, **caractérisé en ce que** le convoyeur (2) comprend un système de commande (20).

5. Convoyeur (2) selon l'une des revendications 1 à 4, **caractérisé en ce que** la perturbation (26) du convoyeur peut être déclenchée automatiquement par déplacement de la marchandise (4) déclenchant la perturbation (26).

6. Procédé d'élimination d'une perturbation (26) d'un convoyeur (2) de marchandises (4), en particulier de conteneurs de fret aérien et de palettes de fret aérien, les marchandises (4) étant transportables le long d'un chemin de transport (8) à l'aide d'au moins un dispositif d'entraînement (10), comprenant les étapes de procédé consistant en :
a) détection de la perturbation (26) ;
b) résolution de la perturbation (26) par déplacement d'au moins une marchandise (4) en réponse à la détection de la perturbation (26), le déplacement étant automatisé et/ou déclenché manuellement par une commande d'un ou plusieurs entraînements respectifs de l'au moins un dispositif d'entraînement (10),
- la perturbation (26), qui est un blocage et/ou un coinçage d'au moins une marchandise (4), étant détectée au moyen d'un premier et d'un second types de détecteur, le premier type de détecteur fournissant une image du convoyeur (2), de préférence au moyen d'une caméra (18a), et le second type de détecteur étant un capteur optique (18b) et
en réponse à la détection de la perturbation (26), le déplacement d'une ou de plusieurs marchandises (4) qui déclenchent la perturbation (26) ;
- la commande d'un ou plusieurs entraînements respectifs au moyen d'un actionneur (24b) est effectuée manuellement ou automatisée par un algorithme avec un système électronique de commande (14), l'algorithme apprenant de préférence de façon automatisée et/ou itérative comment est déclenchée la perturbation (26) ; et
- le système électronique de commande (14) est adapté pour prendre en compte dans l'algorithme un actionnement manuel des actionneurs (24b) pour éliminer la perturbation.

7. Procédé selon la revendication 6, **caractérisé en ce que** la commande d'un ou plusieurs entraînements respectifs du dispositif d'entraînement (10) n'est effectuée que pendant une durée prévue.
